# EUROPEAN PATENT SPECIFICATION

(11) **EP 1 817 732 B1**
(45) Date of publication and mention of the grant of the patent: **01.03.2017**
(21) Application number: 05800719.6
(22) Date of filing: 17.10.2005
(51) Int. Cl.: G06Q 30/00, A23B 4/16, A22C 18/00, A23B 4/06, A22C 7/00, G06Q 10/08, F25D 17/04

(54) **METHOD FOR PROCESSING AND DISTRIBUTION OF MEAT PRODUCTS**
VERFAHREN ZUM VERARBEITEN UND VERTEILEN VON FLEISCHMITTELPRODUKTEN
PROCÉDÉ DE TRAITEMENT ET DE DISTRIBUTION DE PRODUITS CARNÉS

(30) Priority: 18.10.2004 NZ 53603604
(43) Date of publication of application: 15.08.2007
(73) Proprietor: Foodcap International Limited, Auckland 1011 (NZ)
(72) Inventor: PALMER, Roger Keith, Katikati (NZ)
(74) Representative: Hallybone, Huw George
(86) International application number: PCT/NZ2005/000273
(87) International publication number: WO 2006/043834

(56) References cited:
- EP-A1- 0 250 911
- EP-A2- 0 092 816
- EP-A2- 0 384 885
- WO-A1-01/21514
- WO-A1-91/16237
- DE-A1- 3 834 483
- DE-A1- 19 756 551
- GB-A- 2 294 381
- US-A- 2 015 941
- US-A- 3 627 393
- US-A- 3 955 703
- US-A- 3 968 629
- US-A- 5 481 852
- US-A- 5 670 195
- US-A- 5 670 195
- US-B1- 6 430 467
- US-B1- 6 671 578
- DATABASE WPI Week 199817, Derwent Publications Ltd., London, GB; Class Q35, AN 1998-188882, XP008113456 & JP 10 045257 A (MITSUBISHI JUKOGYO KK) 17 February 1998

## Description

### Field of the invention

This invention relates to processing and distribution of perishable or contaminable food products. The invention has particular relevance to meat processing.

Throughout this specification it is to be understood that references to "meat" include all forms of meat of all descriptions generally considered to be edible, for example including without limitation fish, beef, pork, lamb, poultry and offal.

### Background

Processed food perishables which are ready for retail cabinet display, particularly processed meat products, are commonly referred to in the field as "cabinet ready". Currently, cabinet ready meat products are usually prepared at the retail outlet where they are sold. This can be inefficient, and it is desirable to provide a centralised system whereby processing occurs centrally to supply remote retail outlets with cabinet ready meat products for retail sale.

Centralised processing of perishable food products such as meat is problematic for a number of reasons. One is the consumer preference for freshness which can be extremely difficult to achieve when the retail ready product must be transported over large distances to a retail outlet. Another difficulty is the sheer logistics involved in providing a significant product range, which is usually a requirement for most retail outlets to meet their customer's expectations, from one central facility.

Further problems include handling difficulties and food safety. Also, aging is required for some meat types, and this can be a problem in a centralised system.

GB 2 294 381 A (or US-A-6054161) discloses a method of treatment of meat comprising exposing said meat to a controlled gas environment including oxygen under pressure in excess of atmosphere for a predetermined period of time, which provides improved shelf life and appearance.

### Summary of the invention

The present invention provides a method of processing and distribution of meat products for supplying remote retail outlets with cabinet ready products according to independent claim 1. Optional method steps are specified in the dependent claims.

### Brief description of the drawings

One or more embodiments of the invention will be described below by way of example with reference to the accompanying drawings, in which:
Figure 1 is a structure diagram illustrating a process flow;
Figure 1A is a perspective view of a container;
Figure 1B is a perspective view of a cooling and/or compression apparatus for use with the container of Figure 1A;
Figure 1C is a perspective view of a shelving apparatus for use with the container of Figure 1A;
Figure 2 is a diagrammatic side elevation of gas exchange apparatus;
Figure 3 is a diagrammatic plan view of part of a processing facility;
Figure 4 is a diagrammatic plan view of a production cell;
Figure 5 is a diagrammatic plan view of accumulation apparatus;
Figure 6 is a diagrammatic side elevation of the apparatus of Figure 5;
Figure 7 is a diagrammatic plan view of a sorting and packing installation;
Figure 8 is a diagrammatic plan view of sorting apparatus;
Figure 9 is a diagrammatic side elevation of the apparatus of Figure 8;
Figure 10 is a diagrammatic plan view of a vehicle tray showing loading and unloading apparatus.

### Detailed Description

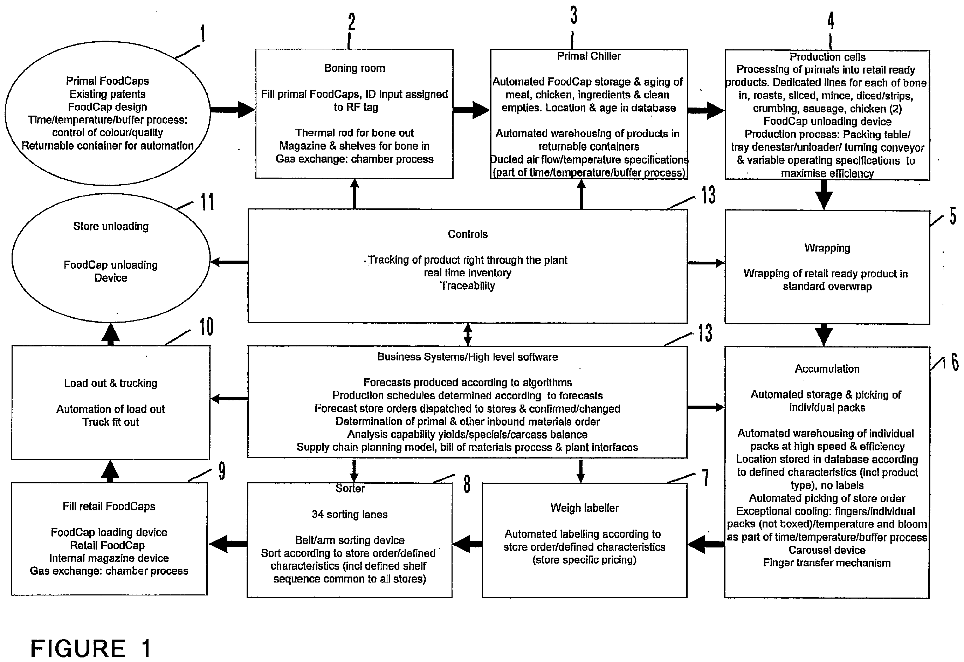

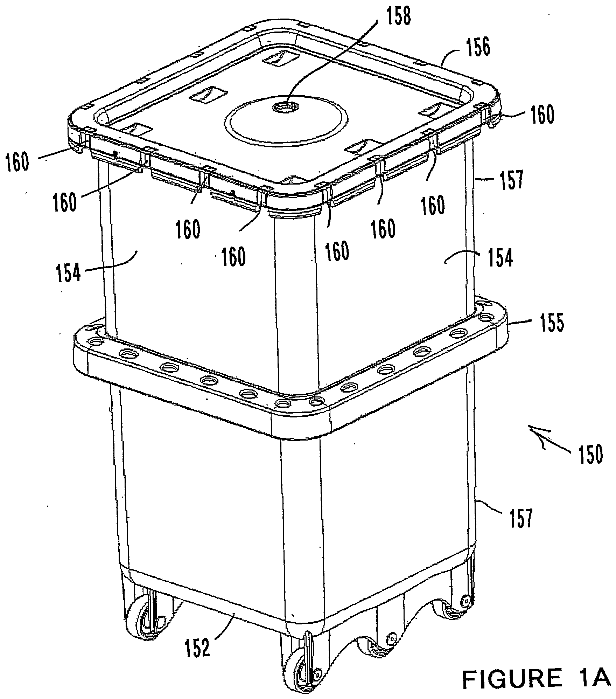

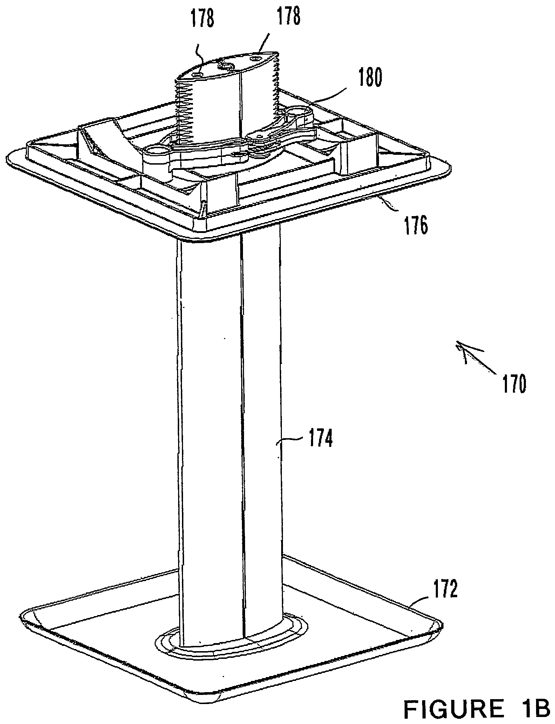

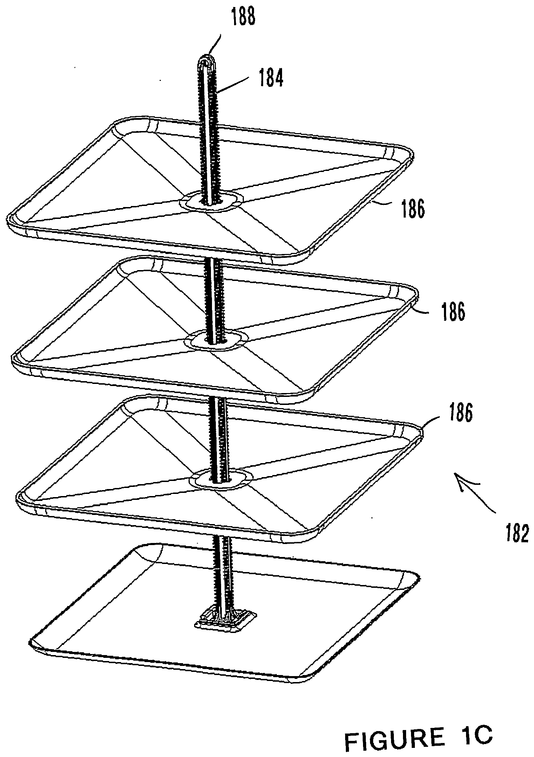

Referring to Figure 1, a schematic flow diagram of a centralized meat processing facility is shown. Although the production processes and associated facility will be described with reference to processing and distribution of meat products, it will be seen by those skilled in the art that the invention may be applicable to distribution and/or processing of a variety of other perishable food products including without limitation agricultural or horticultural produce (both edible or inedible), natural and semi-processed food products and organic products generally. The process also has general application to products in which a controlled atmosphere, or at least controlled temperature conditions, is desirable or necessary for ensuring product quality or longevity.

The process shown in Figure 1 begins in step 1 in which one or more containers is provided for containing one or more meat processing ingredients such as meat primals. The term "primal" generally refers to a food item prior to retail processing. The term "meat primal" refers to meat post slaughter but prior to retail processing. Typically this will refer to meat which has been principally deboned, and could include muscle portions as well as large quantities of mince, for example. In step 2 the primals are placed in the containers. An example of an appropriate container is described in United States patent specification 5670195.

As described in that document, the container may be sealed and provided with a desired atmosphere using a gas flushing process via a valve provided in a lid of the container.

The present invention provides a number of improvements over the container and associated process disclosed in United States patent specifications 5670195 and 6194012.

An example of a preferred container is shown in Figure 1A. Referring to that Figure, the container 150 includes a base 152, one or more side walls (in this example four side walls are shown) 154, and a lid 156. The container has standardized external dimensions which provide a means for handling so as to allow automated handling of the container. Thus an external rib 155 provides a collar which may be used by lifting and transport apparatus, such as the crane referred to above, to engage with the collar for handling the container. Since the external dimensions of the container are standardized, the handling apparatus may handle all the containers in the inventory. The wall(s) of the container may also include a taper 157 to allow one container to be stacked within another. The taper may also facilitate automated handling.

A valve 158 is provided in the lid of each container. Once sealed, the atmosphere within each container may be modified or pressurized, for example by using the valve to evacuate the air within the container surrounding the ingredients and replace it with a desired gas (such as carbon dioxide in the preferred embodiment of the meat processing example) or a desired combination of gases.

The lid may be affixed to the container by clips 160 which have a general "U" shape with one leg of the "U" engaging with the container rim and the other with the lid. The clips allow the lid to be maintained in sealing contact with the container to provide a fluid tight seal, thereby maintaining the desired atmosphere and/or pressurization within the container. The clips also facilitate a mechanical connection between the container body and the lid which assists with the overall structural integrity of the container.

The container may be provided with accessories such as a thermal heatsink in the form of a thermally conductive member that is provided within the container. In a preferred form, the heatsink is provided as an elongate element having a central cavity which may be filled with a suitable substance such as ice. The elongated element may also be used to provide a central support for an upper platen and a lower platen which may be used to provide compression to the meat or other ingredient within the container. An example of a preferred construction is shown in Figure 1B. Compression and/or cooling apparatus 170 may be provided in the container. Thus, if the ingredient is deboned beef primals, then these may be placed between platens 172 and 174. Mechanical compression is applied to the primals by placing downward pressure on platen 176 and engaging it with central stem 174 using the platen engagement mechanism 180. The engagement mechanism 180 may include a biasing mechanism such as a spring to ensure that pressure is maintained on the primals. Alternatively, or in addition, the stem 174 can provide a cooling function. The stem includes a cavity which may be accessed through apertures 178 to allow a coolant such as water to be provided in the cavity and frozen to form ice. As the ice melts following placement of primals in the container about the stem, significant heat energy is drawn from the primals, melting the ice and lowering the temperature of the primals.

Referring now to Figure 1C, a series of removable, height adjustable shelves 182 may be provided within the container for storing bone in cuts or other ingredients. The shelves are adjustably moveable relative to a central support 184 which has a lifting eye 186 to allow a loading or unloading mechanism to lower or lift the shelf unit into or out of the container. The shelves 186 include a contoured central aperture that allows each shelf to be selectively engageable with teeth on the support 184. The shelves engage with the support 184 in one angular disposition, and may be disengaged by rotation (for example through approximately 45 degrees) upon which they may be moved along the support.

Therefore, when ingredients are placed in containers, the user has a number of options for storage or treatment of the ingredients as part of the overall processing. The processing apparatus or components identified above allow the best storage conditions to be utilized for that particular ingredient so as to maximize the quality and/or condition of the perishable product. For example, if poultry primals are to be placed in the container, then these will typically be placed in the container, and the container will simply be lidded. If beef primals are supplied, then these will typically be maintained under mechanical pressure, and the internal cooling apparatus will be used to reduce their temperature. If the beef primals are not deboned, then they are placed on shelves to prevent the bones damaging the meat which would occur if compression was used. The container will typically be gassed with a gas mixture to reduce microbial growth, and pressurized. Bone-in beef primals will typically be placed on shelves within the container, and lidded, then gassed, and pressurized. Other ingredients may also be placed on shelves, and some may not require lidding of the container.

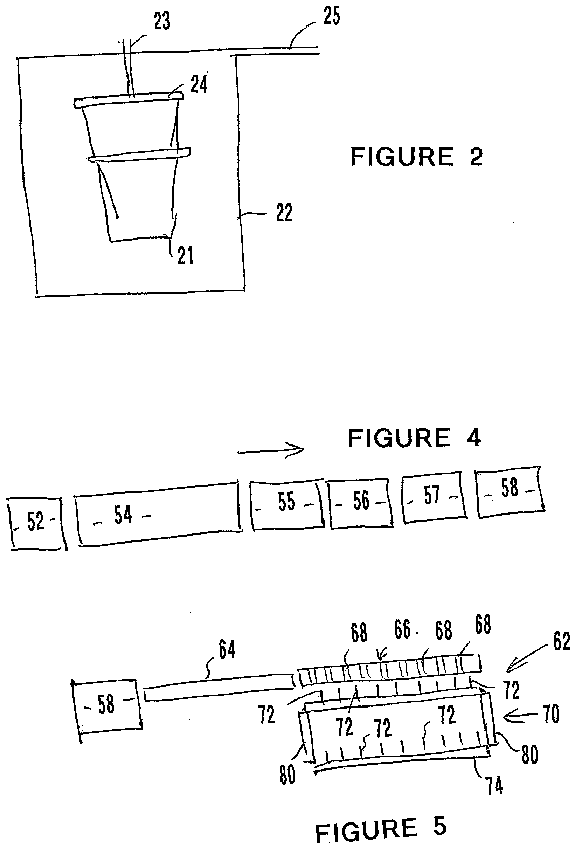

Once the containers have been filled and lidded, the gas exchange process takes place. In a preferred embodiment, the atmosphere within the container is an anaerobic atmosphere. This may be achieved by flushing the container with one or more gases, such as carbon dioxide for example. Turning to Figure 2, apparatus for effecting the gas flushing process is diagrammatically illustrated. The container 21 is placed in a substantially fluid tight enclosure 22. A fluid communication device 23 may be engaged with the valve that is provided in the lid 24 of the container such that a vacuum may be drawn within the container from a vacuum source which may be connected to apparatus 23, and a selected gas or mixture of gases may be introduced into the container through the apparatus 23. The enclosure 22 has a fluid passageway 25 which may also be connected to a source of positive or negative pressure. Control means (not shown) use passageway 25 to adjust the pressure of the atmosphere within enclosure 22 to substantially match the pressure of the atmosphere within the container 21. In this way, mechanical stresses exerted on the walls of the container by the changes in pressure that occurred during the gas flushing process are minimised. This allows containers to be manufactured using less material, making the overall process more economic. It also allows the life of containers to be extended.

Before or after the gassing process has been completed, the container is provided with an identifier. In the preferred embodiment the identifier is provided by applying an RFID (Radio Frequency Indentification) tag to the container. However other methods may be used, for example applying a bar code or a label. This identifier may be used to identify the container, and thus its contents, as it progresses through the process.

Returning to figure 1, the next step in the process is supplying the filled and gassed containers to a controlled atmosphere inventory, which will be referred to in this document as the primal chiller. This occurs in step 3.

The containers are transported to the primal chiller and are stored within the chiller or the container for a selected (preferably a predetermined) period of time for one or more of: cooling the primals (or other ingredients); inventory purposes; aging the primals; production efficiency.

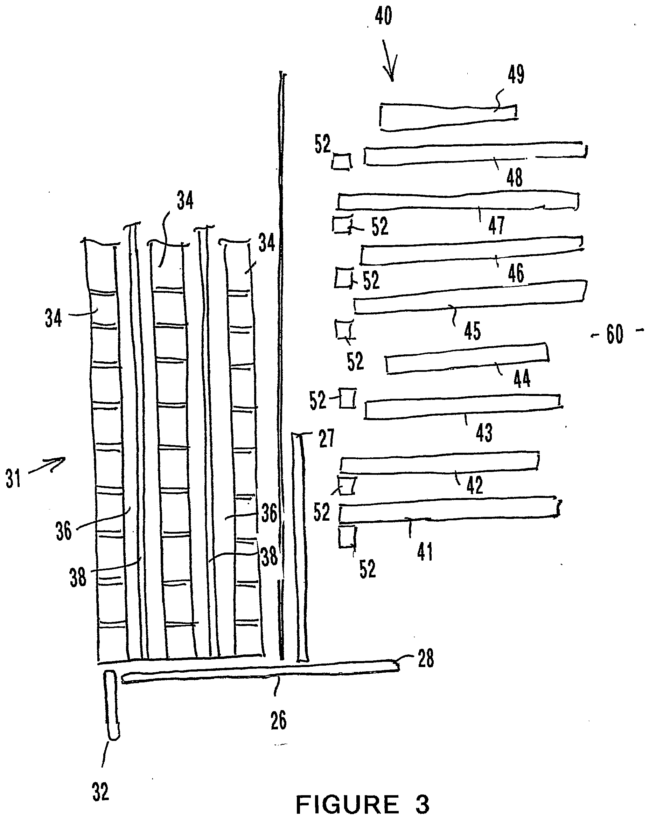

Referring to figure 3, diagrammatic apparatus showing a layout of a centralised meat processing facility at which a meat processing method according to the invention may be performed is shown. The filled containers are preferably introduced into the chiller 31 by a conveyor system 32. The chiller 31 has a plurality of racks or shelves 34 on which containers are placed. These are preferably arranged in rows, leaving aisles 36 in between the rows of shelves 34 in which an automated transport device, such as a crane (not shown) may move, for example long rails 38. In a preferred embodiment the transport apparatus is automated, using a control system whereby the crane is moved to a predetermined location along each of the aisles 36, and then moves loading forks, or similar loading apparatus, to a required rack or shelf to remove or deliver a container to the required rack or shelf location.

The containers may also contain ingredients other then meat for meat processing. As mentioned above, these ingredients will primarily be bone in or bone out primal meat cuts. However, certain containers will contain other ingredients that may be used in a meat processing operation, for example breadcrumbs, by-products such as purge and trim and semi-finished goods.

The removable, height adjustable shelves referred to above may be used for storing bone in cuts or other ingredients in the container.

The containers are placed in the chiller to allow ageing of the meat (which may include chicken for example) while keeping bacterial growth to a minimum. For example, beef may typically be aged from five to seven days before it reaches a retail shelf. The time period for which the meat is aged will vary depending upon a number of factors such as the meat type and the cut type for example.

The location and "age" of the ingredient(s) in each container is recorded and associated with the identity of the container in a database which forms part of the control system 13 (Figure 1). In this way the system knows when a container can or should be removed from the chiller, and where in the chiller it is located so that the moving operation can be performed efficiently.

Once the meat cuts have aged, the containers are transported to production cells in step 4 (Figure 1). The production cells are provided in a production area generally referenced 40 (Figure 3) which has at least one production cell consisting of one or more machines sequentially arranged to produce one or more products from the ingredients provided in the containers. In the example shown in Figure 3 nine production cells (referenced 41 through 49) are provided. In a preferred embodiment, each cell comprises a dedicated production line for each primary product, for example bone-in, roasts, sliced, mince, diced/strips, crumbing, sausage, chicken.

Further conveyor apparatus 26 (Figure 3) allows containers to be transported from the primal chiller to the production area 40. The conveyor apparatus 26 interfaces with the transport apparatus in the primal chiller 31. The control system 13 allows a request to be made in the production area for one or more containers or ingredients to be retrieved from the primal chiller. In a preferred embodiment the control system is implemented using a computerized device and includes business systems that may store data relating to many aspects of the process and related machinery, and include forecasting or predictive algorithms to manage performance and efficiency of the system. The control system allows software models to be constructed for the processes that occur in production cells, and the processes that occur throughout other parts of the system. In this way, the effect on productivity of changes to the system can be predicted. The control system tracks product through the plant in real time, so a real time record of inventory is provided, along with real time traceability of product. The system also allows forecasts to be provided. In this way the amount of product required in inventory (both at pre-retail product stage and the retail product stage) can be determined, together with production schedules, primal and other in-bound materials. Efficiency analysis and yields can also be monitored. The control system includes user interfaces, and interfaces with the automated machinery that it controls.

Once a request for a container or an ingredient has been received, the control system instructs the transport apparatus within the primal chiller 31, and the conveyor apparatus 26, to select and retrieve one or more containers containing the requested ingredients and deliver those containers to the production area 40. In the example shown in Figure 3, the conveyor apparatus 26 discharges the containers to the production area at or about end 27 of the conveyor assembly. However, the conveyor apparatus 20 may be configured to convey the container directly to the selected production cell. Furthermore, conveyor apparatus 26 has a further delivery or entry point 28. This may be used to discharge used containers so that those containers may undergo a cleaning and sterilisation process. Delivery or entry point 28 may also be used to deliver cleaned and sterilised containers to the production area so that these containers may be used to contain semi-finished products, by-products or unused ingredients, as will be described further below.

Referring now to Figure 4, a typical production cell is schematically illustrated in plan view. The production flow path through the cell is in the direction illustrated by arrow 50. A container of a desired ingredient is directed to an unloading device 52 where the container is de-lidded (although in a preferred embodiment de-lidding and purge removal may occur prior to this point), and the unloading device lifts and/or rotates the container in such a way that the contents of the container are emptied under gravity for processing through processing apparatus 54. Alternatively, contents can be unloaded manually, or only partially unloaded. Apparatus 55 de-nests retail trays to allow the retail products to be placed on the trays. De-nesting may occur at various points in the process, depending on when a tray is required. After placement on trays and processing, the products are buffered by a buffer conveyor 56 for provision to a wrapping machine 57. Transfer to the wrapping machine occurs in step 5 (Figure 1). The wrapping process will typically consist of over-wrapping the tray and meat product with clear plastic film. The wrapped retail products are then buffered again on another buffer conveyor 58 to be conveyed for accumulation in a buffer chiller which is generally referenced 60 in Figure 3. Transfer of the retail ready products to the buffer chiller occurs in step 6 in Figure 1.

Referring to Figure 5, the output stage of the production cell is shown diagrammatically in plan view along with a diagrammatic view of automated storage apparatus 62 within the buffer chiller 60. In Figure 5, the production cell has an infeed conveyor assembly 64. As each wrapped product exits the production cell, the infeed conveyor assembly aligns the packages (if necessary) and is indexed until a shelf lot of products is formed. A shelf lot comprises a predetermined number of wrapped products, the exact number being dependent on the package size. In a preferred embodiment the number of products is sixteen, although this number may be increased or decreased depending upon the overall design of the system.

Once a shelf lot has been formed on conveyor 64, the conveyor assembly streams the shelf lot onto a conveyor 66. In a preferred embodiment conveyor 66 consists of a plurality of moveable individual fingers or rollers 68 which are driven so that the shelf lot moves as a group onto conveyor 66 with a desired (preferably substantially even) spacing. The conveyor is stopped when the products are in the required position adjacent to a shelf for transfer, as will be described further below.

The accumulation device includes a carousel generally referenced 70 having a number of product support structures which take the form of shelves formed by individual elongate projecting elements 72 that are laterally spaced and arranged in horizontal rows. The elements 72 are preferably strong yet resilient, and are not prone to corrosion. We have found that a pultruded material such as that sold under the trade mark Pultron™ is a suitable material. The elements 72 are located sufficiently close to each other in a horizontal direction so that standard size retail meat packs are easily supported yet there is sufficient space between the elements to ensure that there is free air circulation so that there is significant volume of air impinging on the surfaces of the retail pack which ensures the contents of the pack are kept at a desired cool (preferably just above freezing) temperature. The elements 72 are spaced in a vertical direction to allow sufficient space to accommodate the height of the required size of retail pack.

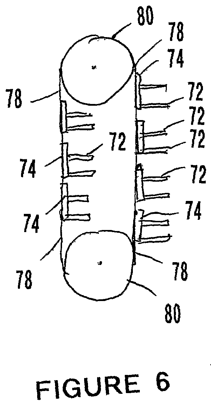

As can be seen in Figure 6, the carousel system includes a number of shelf units 74, each of which is rotatably connected by connector 76 to a flexible support such as chain 78. The chain is in turn supported by rotatable sprockets 80 thereby forming a revolving carousel where the shelves formed by the elements 72 can be moved in the vertical direction for loading, unloading and storage purposes. As shown in this example, each shelf unit 74 preferably has a plurality of rows of shelves formed from the elements 72. However, a greater or lesser number of shelves may be provided depending upon the dimensions of the retail packs to be stored using the system.

The control system 13 is used to index the carousel by rotation of the sprockets so that the required shelf is in the correct position for transfer of the retail products to or from conveyor 66.

We have found that the appearance of red meat, and therefore its retail shelf life, can be improved by conditioning the meat. The conditioning process is performed by keeping the meat at as low a temperature as possible without allowing it to freeze for a predetermined period of time. This reduces oxygen consuming reactions in the meat, leading to an enhanced degree of oxygenation and increased colour stability. Therefore, rather than follow conventional practice and have the processed red meat products delivered to retail as soon as possible, we have found that it is advantageous to allow a conditioning period. This can be implemented in the accumulator since the time of delivery of each package to the accumulator is recorded. Therefore, when a retail order is received, the control system 13 checks the data to determine which products have been in the accumulator for the required period of time (typically about 7hours - 24hours), and product that meets the requirements is despatched. Also, the control system can monitor demand for products (for example by looking at current or historical order information and economic and seasonal information) and adjust processing so that products are introduced into the accumulator at a rate whereby they will have sufficient time to be properly conditioned prior to despatch.

The accumulator provides a solution to warehousing of retail packs in a manner which provides many benefits. It allows the packs to be efficiently cooled to meet the process requirements. It also enables the packs to be automatically accumulated and tracked without labels. This means that labeling (as will be described further below) can take place after receipt of orders and prior to dispatch without any manual intervention such as having to be unpacked from cartons or crates. It also allows flexibility in allocation to retail stores. That is to say orders can be met down to individual packs or alternatively allocation can be made individually across multiple stores. It also provides an automated method for warehousing and handling retail packs prior to retail distribution.

Once retail or cabinet ready products need to leave the buffer chiller (typically as a result of a retail order being received), then the control system locates the appropriate products. As described above, the system has a record of the location of the products in the buffer chiller e.g. carousel 2, shelf 15, shelf region 5. The appropriate carousel is activated to bring the required shelf into a transfer position, and the products are transferred onto a conveyor for delivery to a weigh labeler machine. This occurs in step 7 (Figure 1). Those skilled in the art will appreciate that the transfer mechanism could be moved to a shelf, rather than the shelf being moved to the transfer mechanism.

The weigh labeling machine receives information relating to the pricing structure of the products that have been ordered for the particular retail outlet or the retail chain. This may include "specials" for example, or pricing and/or labeling information for other desired policies or promotions. The information is supplied from the control system 13 and allows the weigh labeling machine to weigh each product and provide a label identifying the product and the price accordingly. Dependent on the relevant pricing policy, some products may not require to be weighed for a price to be allocated. The weigh labeling machine is supplied with information as to the product type by the control system. For example, as a new shelf lot (or part shelf lot) of product from the buffer chiller is directed to the weigh labeling machine, the control system provides identity information on the product type to the weigh labeler.

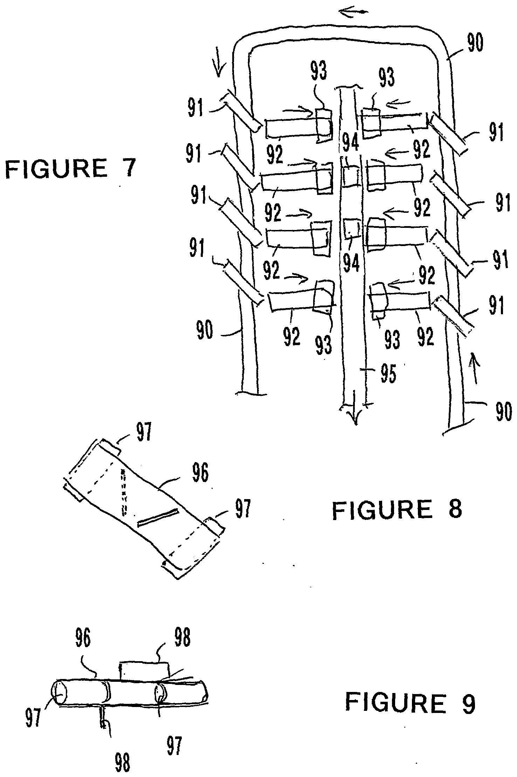

The labeled products then proceed to a sorting stage in step 8. Figure 7 shows a schematic diagram of a sorting lane installation according to a preferred embodiment. The products from the weigh labeler are conveyed on a conveyor 90 past a number of sorting conveyors 91. The control system 13 instructs the sorting conveyors to select products required to satisfy the relevant retail order. The selected products are moved from conveyor 91 by the sorting conveyors onto buffer conveyors 92 for supply to packing stations 93 where the products are placed in reusable sealable containers 94 that are dispatched for transport to the retail outlet via conveyor 95. The products are supplied to the buffer conveyors 92 in a predetermined order so that they may be removed from the container 94 and placed on the retail shelves according to the shelf layout of the retail outlet to which the order is to be dispatched. In a preferred embodiment the sorting process required to achieve the correct order may be performed by the sorter conveyors on instruction from the control system. For example, the control system may know the identity of the product based on the position of the product on conveyor 90, or a label reader such as a bar code or RFID label reader adjacent to the conveyor 90 may provide the control system with identity information for each product so that the control system knows which product to divert from the conveyor 90. Alternatively the products may be discharged from the buffer chiller in the desired order.

Referring to Figures 8 and 9 the sorter conveyors 90 may comprise an endless belt 96 provided about rollers 97, at least one of which is driven. The belt 96 includes paddles 98 that are arranged at an angle (preferably 45 degrees) to the direction of motion of the belt. The belt is arranged in use at an angle (preferably 45 degrees) to the conveyor 90 and the speed of the belt 96 is chosen so that the paddles 98 have the effect of exerting a force on the products that has substantially only a lateral direction. Therefore, the products are pushed sideways across conveyor 96, providing minimal disturbance to the product and its packaging.

The containers 94 may be the same as the containers within which the primals are stored (although cleaned and sterilized). An example of an appropriate container and storage method is disclosed in US patent 6054161.

A shelf system such as that shown and described in Figure 1C may be used for stacking the cabinet ready products in container 94. Upon the containers 94 being filled or partly filled in completion of the relevant retail order, they are lidded and sealed, and in a preferred embodiment the valve in the container lid is again used to modify the atmosphere within the container. These processes occur in step 9 (Figure 1). At this stage of the process it is preferred that a high oxygen atmosphere is provided by the gassing process, for example 80% oxygen. The conditioning process alone provides sufficient oxygenation of the meat to provide a stable desirable colour that is attractive to consumers, but we have found that the addition of further oxygen can enhance the colour and accordingly the retail shelf life of the product. Again, the chamber process (as described above with reference to Figure 2) may be used to perform the gassing operation.

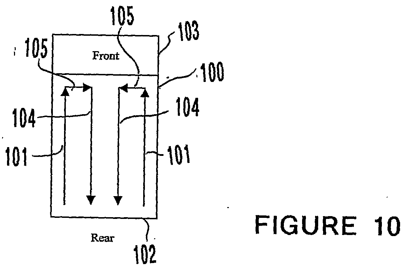

The filled containers of retail product may be transported by truck. In a preferred embodiment the truck, or other vehicle, includes conveyor means which allow containers to be transported to desired positions on the truck carrying tray or deck. As can be seen in Figure 10, in a preferred embodiment the truck or vehicle tray 100 includes two conveyors 101 that may move containers longitudinally from the rear 102 of the truck toward the front 103. Another two conveyors 104 provided in the centre of the tray move containers longitudinally from the back to the front. Two transfer conveyors 105 move the containers laterally between conveyors 101 and 104. This mechanism effectively provides two paths (although a single path could be provided) for containers loaded on the tray and allows convenient and easy loading and unloading. The truck may, for example, be loaded with a full load of containers (e.g. four wide by eight deep). This can be achieved by introducing one container at a time to each of conveyors 101 and indexing those conveyors until the containers reach the front end 103 of the tray. The transfer conveyors can then move the container to the conveyors 104 to move them to the front of the tray. Alternatively, the containers can simply be moved onto the tray using a device such as a forklift. Full containers are likely in use to be unloaded one or two at a time at various retail outlets on a route followed by the vehicle. Typically, as each container is dropped off, an empty container is loaded onto the vehicle to replace it. The empty containers are cleaned and sterilized for re-use. The containers on conveyor 104 at the rear 102 of the tray are removed first, and when this occurs, the conveyors 101, 102 and 105 are all indexed to create one or more spaces at the rear end of conveyors 101. This provides an easily accessible space at the rear of the vehicle where the operator may load on the empty containers. Apart from easing the operator's task, the system has the advantage that the vehicle load remains substantially balanced. In a preferred embodiment the container size is chosen so that maximum use is made of the vehicle carrying space. Thus, preferred dimensions enable containers to be placed four wide and stacked three high on a standard truck tray.

Throughout this document the word "comprise" and variations thereof is intended to be interpreted in an inclusive sense.

Where in the foregoing description reference has been made to specific components or integers of the invention having no equivalents, then such equivalents are herein incorporated as if individually set forth.

Although this invention has been described by way of example and with reference to possible embodiments thereof, it is to be understood that modifications or improvements may be made thereto without departing from the scope of the invention as defined in the appended claims.

## Claims

1. A method of processing and distribution of meat products for supplying remote retail outlets with cabinet ready products, the method including the steps of:
placing primal meat products in a first sealable reusable container and storing the primal meat products in the first container for a first period of time;
removing the primal meat products from the container at the end of the first period of time and processing the primal meat products into retail meat products;
storing the retail meat products in a central storage facility for a storage for a predetermined second period of time and at a temperature selected to improve colour stability of the retail meat products by reducing oxygen consuming reactions in the retail meat products;
receiving a retail order;
determining which retail meat products required in the retail order have been stored in the central storage facility for the predetermined second period of time;
selecting retail meat products in the central storage facility dependent on the retail order which have been stored in the central storage facility for the predetermined second period of time; and
transporting the selected retail meat products in a second sealable reusable container to a remote retail facility in cabinet ready form.

2. A method as claimed in claim 1, wherein the retail meat products are packaged prior to placement in the central storage facility.

3. A method as claimed in either of claims 1 or 2, wherein the primal meat products are stored in the first sealable reusable container for the first period of time for one or more of: cooling the primals; inventory purposes; aging the primal meat products; production efficiency.

4. A method as claimed in any one of claims 1 to 3, wherein the first or second period of time is dependent upon the nature of the product.

5. A method as claimed in any one of claims 1 to 4, further comprising sealing the first sealable reusable container and modifying an atmosphere within the first sealable reusable container after placement of the primal meat products within the first sealable reusable container.

6. A method as claimed in claim 5, wherein the atmosphere within the first container with the meat therein is a substantially anaerobic atmosphere.

7. A method as claimed in claim 6, wherein the atmosphere comprises CO₂ and one or more other gases excluding oxygen.

8. A method as claimed in claim 5, wherein the atmosphere within the first container is modified to provide the desired atmosphere by a gassing process which includes drawing a vacuum in the container and introducing one or more gases to provide the desired atmosphere.

9. A method as claimed in claim 8, wherein the gassing process is performed more than once in order to provide the desired atmosphere.

10. A method as claimed in claim 8, wherein the first container is placed in a variable pressure chamber to perform the gassing process, the pressure within the variable pressure chamber being reduced or increased dependent on the pressure within the container to thereby reduce stress on the container.

11. A method as claimed in claim 2, wherein the meat is placed under mechanical pressure within the first container.

12. A method as claimed in claim 1, wherein a cooling means is placed in the first container to cool the meat.

13. A method as claimed in claim 1, wherein one or more shelves are provided in the first container to support the primals.

14. A method as claimed in claim 1, further comprising one or both of the first and the second container being provided with an electronically readable identification tag.

15. A method as claimed in claim 2, wherein the first container is stored at a temperature which is close to the freezing temperature of the meat but which is not sufficiently low to cause the meat to freeze.

16. A method as claimed in claim 3, wherein the first time period is selected to age the meat.

17. A method as claimed in claim 2, wherein the storage location of the first container and an indication of the age of the meat is recorded.

18. A method as claimed in claim 1, wherein the first container, while in storage, is subjected to an air flow impinging thereon at a velocity in the range of approximately 1 to 2 meters per second, at a temperature of approximately -2 to 3 degrees Celsius.

19. A method as claimed in claim 1, wherein the first container is automatically delivered to and/or retrieved from storage.

20. A method as claimed in claim 2, further comprising delivering the first container to a production cell.

21. A method as claimed in claim 1, further comprising one or both of the first container and the second container being provided to a cleaning facility for reuse.

22. A method as claimed in claim 20, wherein the packaged products leave the production cell in a retail or cabinet ready state.

23. A method as claimed in claim 2, wherein the packaged products are delivered to the central storage facility in an unlabelled condition.

24. A method as claimed in claim 2, wherein identity of the packaged products in the central storage facility is determined by means other than a label.

25. A method as claimed in claim 2, wherein a location of packaged products in the central storage facility is recorded.

26. A method as claimed in claim 2, wherein a location of the packaged products in the central storage facility is used to identify and/or track the packaged products.

27. A method as claimed in claim 2 wherein an indication of the time for which each packaged product has been in the central storage facility is recorded.

28. A method as claimed in claim 27, wherein packaged products for fulfilling a retail order are automatically selected based on at least some of the recorded information.

## Patentansprüche

1. Verfahren zum Verarbeiten und Verteilen von Fleischmittelprodukten zur Belieferung von entfernt liegenden Einzelhandelsgeschäften mit Verkaufsprodukten, wobei das Verfahren die folgenden Schritte aufweist:
Platzieren von Frischfleischprodukten in einem ersten verschließbaren wiederverwendbaren Behälter und Lagern der Frischfleischprodukte im ersten Behälter für eine erste Zeitspanne;
Entfernen der Frischfleischprodukte aus dem Behälter am Ende der ersten Zeitspanne und Verarbeiten der Frischfleischprodukte zu Fleischprodukten für den Einzelhandel;
Lagern der Fleischprodukte für den Einzelhandel in einer zentralen Lagereinrichtung für eine Lagerung für eine vorbestimmte zweite Zeitspanne und bei einer Temperatur, die so gewählt wird, dass sie die Farbstabilität der Fleischprodukte für den Einzelhandel verbessert, indem Sauerstoff konsumierende Reaktionen in den Fleischprodukten für den Einzelhandel verringert werden;
Erhalten einer Einzelhandelsbestellung;
Feststellen, welche Fleischprodukte für den Einzelhandel, die in der Einzelhandelsbestellung verlangt werden, in der zentralen Lagereinrichtung für die vorbestimmte zweite Zeitspanne gelagert wurden;
Auswählen von Fleischprodukten für den Einzelhandel in der zentralen Lagereinrichtung, in Abhängigkeit von der Einzelhandelsbestellung, die in der zentralen Lagereinrichtung für die vorbestimmte zweite Zeitspanne gelagert wurden; und
Transportieren der ausgewählten Fleischprodukte für den Einzelhandel in einem zweiten verschließbaren wiederverwendbaren Behälter zu einem entfernt liegenden Einzelhandelsgeschäft in verkaufsfertiger Form.

2. Verfahren nach Anspruch 1, wobei die Fleischprodukte für den Einzelhandel vor der Platzierung in der zentralen Lagereinrichtung verpackt werden.

3. Verfahren nach einem der Ansprüche 1 oder 2, wobei die Frischfleischprodukte in dem ersten verschließbaren wiederverwendbaren Behälter für die erste Zeitspanne für einen oder mehrere der folgenden Zwecke gelagert werden: Kühlen der Frischfleischprodukte; Inventurzwecke; Reifung der Frischfleischprodukte; Produktionseffizienz.

4. Verfahren nach einem der Ansprüche 1 bis 3, wobei die erste oder zweite Zeitspanne von der Art des Produkts abhängt.

5. Verfahren nach einem der Ansprüche 1 bis 4, ferner umfassend das Verschließen des ersten verschließbaren wiederverwendbaren Behälters und die Modifizierung einer Atmosphäre in dem ersten verschließbaren wiederverwendbaren Behälter nach der Platzierung der Frischfleischprodukte in dem ersten verschließbaren wiederverwendbaren Behälter.

6. Verfahren nach Anspruch 5, wobei die Atmosphäre im ersten Behälter mit dem Fleisch darin im Wesentlichen eine anaerobe Atmosphäre ist.

7. Verfahren nach Anspruch 6, wobei die Atmosphäre CO₂ und ein oder mehrere andere Gase ohne Sauerstoff umfasst.

8. Verfahren nach Anspruch 5, wobei die Atmosphäre im ersten Behälter modifiziert wird, um die gewünschte Atmosphäre bereitzustellen, durch ein Begasungsverfahren, bei dem ein Vakuum in den Behälter gezogen wird und ein oder mehrere Gase eingeführt werden, um die gewünschte Atmosphäre bereitzustellen.

9. Verfahren nach Anspruch 8, wobei das Begasungsverfahren mehr als einmal durchgeführt wird, um die gewünschte Atmosphäre bereitzustellen.

10. Verfahren nach Anspruch 8, wobei der erste Behälter in eine variable Druckkammer gestellt wird, um das Begasungsverfahren durchzuführen, wobei der Druck in der variablen Druckkammer je nach dem Druck im Behälter verringert oder erhöht wird, um so die Belastung des Behälters zu reduzieren.

11. Verfahren nach Anspruch 2, wobei das Fleisch unter mechanischen Druck in dem ersten Behälter gesetzt wird.

12. Verfahren nach Anspruch 1, wobei ein Kühlmittel in dem ersten Behälter zum Kühlen des Fleischs platziert wird.

13. Verfahren nach Anspruch 1, wobei ein oder mehrere Regale im ersten Behälter zum Stützen der Frischfleischprodukte bereitgestellt werden.

14. Verfahren nach Anspruch 1, ferner umfassend, dass der erste Behälter und/oder der zweite Behälter mit einer elektronisch lesbaren Erkennungsmarke ausgestattet sind.

15. Verfahren nach Anspruch 2, wobei der erste Behälter bei einer Temperatur gelagert wird, die nahe bei der Gefriertemperatur des Fleischs liegt, aber nicht ausreichend niedrig ist, um das Fleisch einzufrieren.

16. Verfahren nach Anspruch 3, wobei die erste Zeitspanne so gewählt wird, dass das Fleisch reift.

17. Verfahren nach Anspruch 2, wobei der Lagerort des ersten Behälters und ein Hinweis auf das Alter des Fleischs aufgezeichnet werden.

18. Verfahren nach Anspruch 1, wobei der erste Behälter während der Lagerung einer Luftströmung ausgesetzt wird, die auf ihn mit einer Geschwindigkeit im Bereich von ungefähr 1 bis 2 Metern pro Sekunde bei einer Temperatur von ungefähr -2 bis 3 Grad Celsius auftrifft.

19. Verfahren nach Anspruch 1, wobei der erste Behälter automatisch in die Lagerung gebracht und/oder aus dieser geholt wird.

20. Verfahren nach Anspruch 2, ferner umfassend die Überführung des ersten Behälters an eine Produktionszelle.

21. Verfahren nach Anspruch 1, ferner umfassend, dass der erste Behälter und/oder der zweite Behälter zur Wiederverwendung zu einer Reinigungseinrichtung bereitgestellt werden.

22. Verfahren nach Anspruch 20, wobei die verpackten Produkte die Produktionszelle in einem für den Einzelhandel bereiten oder verkaufsfertigen Zustand verlassen.

23. Verfahren nach Anspruch 2, wobei die verpackten Produkte in einem nicht etikettierten Zustand an die zentrale Lagereinrichtung abgegeben werden.

24. Verfahren nach Anspruch 2, wobei die Identität der verpackten Produkte in der zentralen Lagereinrichtung mit einem anderen Mittel als einem Etikett ermittelt wird.

25. Verfahren nach Anspruch 2, wobei ein Ort der verpackten Produkte in der zentralen Lagereinrichtung aufgezeichnet wird.

26. Verfahren nach Anspruch 2, wobei ein Ort der verpackten Produkte in der zentralen Lagereinrichtung zur Identifizierung und/oder Verfolgung der verpackten Produkte verwendet wird.

27. Verfahren nach Anspruch 2, wobei ein Hinweis auf die Zeit, für die jedes verpackte Produkt in der zentralen Lagereinrichtung war, aufgezeichnet wird.

28. Verfahren nach Anspruch 27, wobei verpackte Produkte zum Ausführen einer Einzelhandelsbestellung auf Basis zumindest einiger der aufgezeichneten Informationen automatisch ausgewählt werden.

## Revendications

1. Méthode de transformation et de distribution de produits carnés pour approvisionner des magasins de détail éloignés en produits prêts à mettre en rayonnage vitré, la méthode comportant les étapes consistant à :
placer les produits carnés primitifs dans un premier conteneur réutilisable scellable et stocker les produits carnés primitifs dans le premier conteneur pendant une première période de temps ;
retirer les produits carnés primitifs du conteneur à la fin de la première période de temps et transformer les produits carnés primitifs en produits carnés de détail ;
stocker les produits carnés de détail dans une installation de stockage centrale pour un stockage pendant une deuxième période de temps prédéterminée et à une température sélectionnée pour améliorer la stabilité de la couleur des produits carnés de détail par la réduction des réactions consommatrices d'oxygène dans les produits carnés de détail ;
recevoir une commande de détail ;
déterminer quels produits carnés de détail requis dans la commande de détail ont été stockés dans l'installation de stockage centrale pendant la deuxième période de temps prédéterminée ;
sélectionner les produits carnés de détail dans l'installation de stockage centrale en fonction de la commande de détail qui ont été stockés dans l'installation de stockage centrale pendant la deuxième période de temps prédéterminée ; et
transporter les produits carnés de détail sélectionnés dans un deuxième conteneur réutilisable scellable jusqu'à une installation de détail éloignée sous forme prête à mettre en rayonnage vitré.

2. Méthode selon la revendication 1, dans laquelle les produits carnés de détail sont emballés préalablement à leur placement dans l'installation de stockage centrale.

3. Méthode selon l'une ou l'autre parmi les revendications 1 ou 2, dans laquelle les produits carnés primitifs sont stockés dans le premier conteneur réutilisable scellable pendant la première période de temps pour un ou plusieurs parmi : refroidir les produits primitifs ; à des fins d'inventaire ; faire vieillir les produits carnés primitifs ; efficacité de production.

4. Méthode selon l'une quelconque des revendications 1 à 3, dans laquelle la première ou la deuxième période de temps est fonction de la nature du produit.

5. Méthode selon l'une quelconque des revendications 1 à 4, comprenant en outre le scellement du premier conteneur réutilisable scellable et la modification d'une atmosphère au sein du premier conteneur réutilisable scellable après placement des produits carnés primitifs au sein du premier conteneur réutilisable scellable.

6. Méthode selon la revendication 5, dans laquelle l'atmosphère au sein du premier conteneur renfermant la viande est une atmosphère sensiblement anaérobie.

7. Méthode selon la revendication 6, dans laquelle l'atmosphère comprend du CO₂ et un ou plusieurs autres gaz à l'exception de l'oxygène.

8. Méthode selon la revendication 5, dans laquelle l'atmosphère au sein du premier conteneur est modifiée afin de fournir l'atmosphère désirée par un procédé de gazage qui comporte une mise sous vide dans le conteneur et l'introduction d'un ou plusieurs gaz afin de fournir l'atmosphère désirée.

9. Méthode selon la revendication 8, dans laquelle le procédé de gazage est effectué plus d'une fois afin de fournir l'atmosphère désirée.

10. Méthode selon la revendication 8, dans laquelle le premier conteneur est placé dans une chambre à pression variable afin de réaliser le procédé de gazage, la pression au sein de la chambre à pression variable étant réduite ou accrue en fonction de la pression au sein du conteneur afin de réduire ainsi les contraintes sur le conteneur.

11. Méthode selon la revendication 2, dans laquelle la viande est placée sous pression mécanique au sein du premier conteneur.

12. Méthode selon la revendication 1, dans laquelle un moyen de refroidissement est placé dans le premier conteneur afin de refroidir la viande.

13. Méthode selon la revendication 1, dans laquelle une ou plusieurs étagères sont fournies dans le premier conteneur afin de supporter les produits primitifs.

14. Méthode selon la revendication 1, comprenant en outre la fourniture d'une étiquette d'identification électroniquement lisible à l'un parmi le premier et le deuxième conteneur, ou aux deux.

15. Méthode selon la revendication 2, dans laquelle le premier conteneur est stocké à une température qui est proche de la température de congélation de la viande mais qui n'est pas suffisamment basse pour provoquer la congélation de la viande.

16. Méthode selon la revendication 3, dans laquelle la première période de temps est sélectionnée pour faire vieillir la viande.

17. Méthode selon la revendication 2, dans laquelle le lieu de stockage du premier conteneur et une indication de l'âge de la viande sont enregistrés.

18. Méthode selon la revendication 1, dans laquelle le premier conteneur, lors du stockage, est soumis à un courant d'air empiétant sur celui-ci à une vitesse dans la plage allant d'environ 1 à 2 mètres par seconde, à une température allant d'environ -2 à 3 degrés Celsius.

19. Méthode selon la revendication 1, dans laquelle le premier conteneur est automatiquement distribué vers le stockage et/ou récupéré à partir de celui-ci.

20. Méthode selon la revendication 2, comprenant en outre la distribution du premier conteneur vers une cellule de production.

21. Méthode selon la revendication 1, comprenant en outre la distribution de l'un, ou des deux, parmi le premier conteneur et le deuxième conteneur à une installation de nettoyage à des fins de réutilisation.

22. Méthode selon la revendication 20, dans laquelle les produits emballés quittent la cellule de production à l'état prêt pour le détail ou la mise en rayonnage vitré.

23. Méthode selon la revendication 2, dans laquelle les produits emballés sont distribués à l'installation de stockage centrale à l'état non étiqueté.

24. Méthode selon la revendication 2, dans laquelle l'identité des produits emballés dans l'installation de stockage centrale est déterminée par un moyen autre qu'une étiquette.

25. Méthode selon la revendication 2, dans laquelle la localisation des produits emballés dans l'installation de stockage centrale est enregistrée.

26. Méthode selon la revendication 2, dans laquelle la localisation des produits emballés dans l'installation de stockage centrale est utilisée pour identifier et/ou suivre les produits emballés.

27. Méthode selon la revendication 2, dans laquelle une indication du temps pendant lequel chaque produit emballé est resté dans l'installation de stockage centrale est enregistrée.

28. Méthode selon la revendication 27, dans laquelle les produits emballés destinés à répondre à une commande de détail sont automatiquement sélectionnés sur la base d'au moins une partie des informations enregistrées.
